# EUROPÄISCHE PATENTANMELDUNG

(11) **EP 1 587 076 A1**
(43) Veröffentlichungstag der Anmeldung: **19.10.2005**
(21) Anmeldenummer: 04008967.4
(22) Anmeldetag: 15.04.2004
(51) Int. Cl.: G11B 7/08

(54) **Gerät zum Lesen und/oder Beschreiben optischer Aufzeichnungsträger**

(71) Anmelder: DEUTSCHE THOMSON-BRANDT GMBH, 78048 Villingen-Schwenningen (DE)
(72) Erfinder: Burkart, Harald, 78054 Villingen-Schwenningen (DE); Tabor, Günter, 78056 Villingen-Schwenningen (DE)
(74) Vertreter: Thies, Stephan

(57) **Zusammenfassung**

Die vorliegende Erfindung betrifft Gerät zum Lesen und/oder Beschreiben optischer Aufzeichnungsträger mit einem optischen Aufbau (10) und mit einer mit diesem gekoppelten Laserdiode.

Aufgabe der Erfindung ist es, ein verbessertes derartiges Gerät vorzuschlagen.

Erfindungsgemäß ist die Laserdiode eine Twin-Laserdiode (1), die mittels eines translativ verschiebbaren Rotationsgelenks (10) mit dem optischen Aufbau (9) gekoppelt ist.

## Beschreibung

Die vorliegende Erfindung betrifft ein Gerät zum Lesen und/oder Beschreiben optischer Aufzeichnungsträger mit einem optischen Aufbau und einer mit diesem gekoppelten Laserdiode.

Aufgabe der Erfindung ist es, ein verbessertes derartiges Gerät vorzuschlagen.

Erfindungsgemäß ist vorgesehen, daß die Laserdiode eine Twin-Laserdiode ist, die mittels eines translativ verschiebbaren Rotationsgelenks mit dem optischen Aufbau gekoppelt ist. Dies hat den Vorteil, daß eine einfache Justage der Twin-Laserdiode relativ zum idealen Strahlengang des optischen Aufbaus ermöglicht ist, da sowohl Translations- als auch Rotationsmöglichkeit besteht. Dies sind die zwei wesentlichen Freiheitsgrade, um die eine Twin-Laserdiode zu justieren ist. Die Justage erfolgt, je nach Eigenschaft und Anforderung des optischen Aufbaus, auf einen der beiden Strahlen der Twin-Laserdiode optimiert. Auch eine auf beide Strahlen nahezu angepaßte Kompromißlösung ist hier vorteilhaft möglich. Als Twin-Laserdiode wird eine Laserdiode oder allgemein Lichtquelle angesehen, die Licht unterschiedlicher Wellenlänge abzustrahlen in der Lage ist, wobei jeder Wellenlänge jeweils unterschiedliche, voneinander beabstandete Emissionspunkte zugeordnet sind. Bei Twin-Laserdioden handelt es sich um zwei erzeugte Wellenlängen, aber auch eine größere Anzahl unterschiedlicher Wellenlängen liegt im Rahmen der Erfindung. Als optische Aufzeichnungsträger kommen die bekannten optischen Aufzeichnungsträger CD, DVD in Betracht oder auch andere optische Aufzeichnungsmedien. Der optische Aufbau dient zum optischen Abtasten des optischen Aufzeichnungsträgers und zum Detektieren der vom optischen Aufzeichnungsträger erhaltenen Informationen. Die Laserdiode dient zum Erzeugen eines Lichtstrahls zum Abtasten des optischen Aufzeichnungsträgers mittels des optischen Aufbaus. Sie ist mit diesem gekoppelt, um einen von ihr erzeugten Lichtstrahl in korrekt justierter Orientierung in den optischen Aufbau einzuspeisen.

Erfindungsgemäß ist vorgesehen, daß das translatorisch verschiebbare Rotationselement ein Schieber ist, der von einer Feder vorgespannt, und mittels eines Einstellelements entgegen der Vorspannung verschiebbar ist, und mit einem Aufnehmer für die Laserdiode drehbeweglich verbunden ist. Dies hat den Vorteil, daß nicht der Aufnehmer für die Laserdiode, sondern lediglich der Schieber verschoben zu werden braucht, während mit dem Aufnehmer lediglich eine Rotationseinstellung vorzunehmen ist. Getrenntes Einstellen dieser Funktionen vereinfacht die Einstellung und verringert mögliche Fehleinstellungen. Auf spezielle Einstellvorrichtungen kann verzichtet werden, was insbesondere dann vorteilhaft ist, wenn nur ein geringer Bauraum vorhanden ist, der das Angreifen einer externen Einstellvorrichtung behindert oder unmöglich macht. Der Aufnehmer für die Laserdioden ist im allgemeinen relativ groß dimensioniert; um eine sichere Auflage für die Laserdiode zu bieten und entsprechende Abwärme effektiv abzuführen. Bei der Feder handelt es sich vorteilhafterweise um eine Druckfeder, die an einer Seite des Schiebers angreift, während das Einstellelement ein Druckelement ist, das auf der gegenüberliegenden Seite des Schiebers angreift. Aber auch eine einseitige Anordnung von Feder und Einstellelement ist vorteilhaft möglich. In diesem Fall werden Zugfeder und Druckelement oder Druckfeder und Zugelement kombiniert.

Vorteilhafterweise ist das Einstellelement ein Exzenter. Dies hat den Vorteil, daß es sich hierbei um eine besonders einfache Möglichkeit handelt, translatorische Einstellungen vorzunehmen. Der Exzenter ist vorteilhafterweise auf der gegenüberliegenden Seite einer Druckfeder angeordnet.

Erfindungsgemäß ist vorgesehen, daß die zueinander justierten Elemente Laserdiode, Rotationsgelenk und optischer Aufbau miteinander verklebt sind. Dies ist eine besonders einfache und sichere Maßnahme, die relative Lage dieser Elemente noch Erfolg der Justierung zu fixieren und eventuell alterungsbedingt oder temperaturbedingt mögliche Verschiebungen der Elemente gegeneinander zu unterbinden.

Vorteilhafte Ausgestaltungen der Erfindung sind ebenfalls der nachfolgenden Beschreibung eines Ausführungsbeispiels zu entnehmen. Es versteht sich, daß die Erfindung nicht auf die angegebenen Kombinationen beschränkt ist.

Es zeigen:
- Fig. 1: erfindungsgemäßes Gerät in schematischer Darstellung,
- Fig. 2: Rotationsgelenk eines erfindungsgemäßen Geräts,
- Fig. 3: Teil eines erfindungsgemäßen Geräts, und
- Fig. 4: Teil eines erfindungsgemäßen Geräts mit Laserdiode.

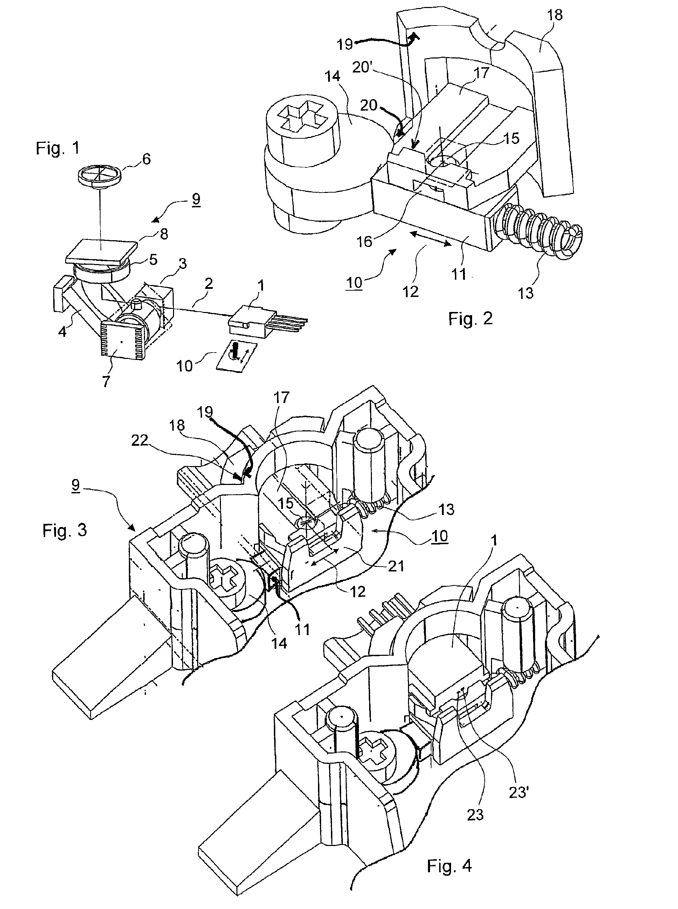

Fig. 1 zeigt in schematischer Darstellung den Strahlengang in einem erfindungsgemäßen Gerät. Eine Laserdiode, hier eine Twin-Laserdiode 1, erzeugt einen linear polarisierten Abtaststrahl 2, der einen Strahlteiler 3 passiert, von einem Spiegel 4 abgelenkt wird, einen Kollimator 5 und ein λ/4-Plättchen 8 passiert sowie von einer Objektivlinse 6 auf einen hier nicht dargestellten optischen Aufzeichnungsträger fokussiert wird. Von dort wird der Abtaststrahl 2 reflektiert und von dem polarisierenden Strahlteiler 3 auf ein Detektorelement 7 geworfen. Die Twin-Laserdiode 1 ist in der Lage, Abtaststrahlen unterschiedlicher Wellenlänge abzugeben, die zum Abtasten unterschiedlicher optischer Aufzeichnungsträger, wie beispielsweise CD und DVD, geeignet sind. Dabei sind die Emissionspunkte der beiden Abtaststrahlen geringfügig gegeneinander verschoben. Die Verschiebung liegt dabei in der Größenordnung von 100µm, im Ausführungsbeispiel bei 110µm. Zum Justieren der Laserdiode 1 bezüglich des Strahlengangs des aus den Elementen 3 bis 8 bestehenden optischen Aufbaus 9 ist ein verschiebbares Rotationsgelenk 10 vorgesehen. Dieses ist hier schematisch dargestellt, Pfeile deuten die translatorische und rotatorische Beweglichkeit an.

Fig. 2 zeigt Details des Rotationsgelenks 10 eines erfindungsgemäßen Geräts. Man erkennt einen Schieber 11, der in Richtung des Doppelpfeils 12 translatorisch verschiebbar ist. Auf der in der Abbildung rechten Seite wird der Schieber 11 mittels einer Druckfeder 13 nach links vorgespannt. Auf der in der Abbildung rechten Seite wird der Schieber 11 mittels eines Exzenters 14 abgestützt. Verdrehen des Exzenters 14 bewirkt, daß der Schieber 11 in Zusammenwirken mit der Druckfeder 13 nach links beziehungsweise rechts in Richtung des Pfeils 12 verschoben wird. Der Exzenter 14 dient dabei als Einstellelement. Der Schieber 11 ist an seiner Oberseite mit einem Zapfen 15 versehen, der in einer Ausnehmung 16 eines Aufnehmers 17 angeordnet ist. Aufnehmer 17 und Schieber 11 sind somit drehbeweglich um die Achse des Zapfen 15 miteinander verbunden. Der Aufnehmer 17 ist mit einem Anschlagelement 18 verbunden, vorteilhafterweise einstückig mit diesem ausgeführt, welches eine gekrümmte Fläche 19 aufweist, deren Zylinderachse in etwa mit derjenigen des Zapfen 15 zusammenfällt. Der Aufnehmer 17 ist mit Anschlagflächen 20, 20' versehen, an denen die hier nicht dargestellte Laserdiode 1 zur Anlage kommt und somit ausgerichtet wird.

Fig. 3 zeigt einen Teil eines erfindungsgemäßen Geräts, in dem das Rotationsgelenk 10 angeordnet ist. Man erkennt den Aufnehmer 17, dem unter ihm hervorragenden Schieber 11, den Exzenter 14 und die Druckfeder 13. Es ist weiterhin erkennbar, daß der Aufnehmer 17 an einem vorderen Anschlag 21 anliegt, an dem entlang in Richtung des Pfeils 12 die durch Exzenter 14 und Druckfeder 13 hervorgerufene translatorische Bewegung erfolgt. Bei der rotatorischen Bewegung um die Achse des Zapfens 15 gleitet die gekrümmte Fläche 19 des Anschlagelements 18 an einer gegenläufig gekrümmten Fläche 22 des optischen Aufbaus 9 entlang. Nachdem in einem Justiervorgang sowohl die translatorische als auch die rotatorische Justierung vorgenommen worden ist, werden die jeweiligen Elemente mittels eines Klebstoffs miteinander verbunden. Dies erfolgt beispielsweise durch Einfügen des Klebstoffs zwischen die Flächen 19 und 22 sowie an Exzenter 14, Schieber 11, Anschlag 21, Aufnehmer 17 und Feder 13.

Fig. 4 zeigt den gleichen Teil eines erfindungsgemäßen Geräts wie Fig. 3 hier allerdings mit Laserdiode 1. Schematisch angedeutet sind hier die unterschiedlichen Emissionspunkte 23, 23' für die unterschiedlichen von der Twin-Laserdiode 1 erzeugten Laserstrahlen. Alle anderen Elemente entsprechen den zu Fig. 3 beschriebenen.

Bei Twin-Laserdioden 1 ist es notwendig, den Emissionspunkt der Diode für CD-Strahl oder DVD-Strahl, die nicht in einem Punkt liegen, entsprechend des optischen Designs (CD- oder DVD-Vorzug) rotativ als auch translativ zu justieren. Um zu vermeiden, daß der komplette Aufnehmer 17 der Laserdiode 1 sowohl rotativ als auch translativ justiert werden muß, wird nur der Rotationspunkt des Laserhalters translativ verschiebbar ausgeführt. Das Rotationsgelenk, z.B. feststehender Zapfen 15 und Bohrung, des Laserhalters wird auf einen Schieber 11 aufgebracht. So wird vermieden, daß der komplette Aufnehmer 17 des Lasers 1, in dem begrenzten Bauraum der optischen Abtasteinheit (Pick-up) verschoben werden muß. Wird der Schieber 11 mittels einer Kraft, z.B. durch eine Feder, gegen einen einstellbaren Anschlag, z.B. Exzenterscheibe, gedrückt so kann auf eine spezielle Einstellvorrichtung für die Translativbewegung verzichtet werden. Die Applikation ist überall dort sinnvoll, wo auf kleinem Bauraum eine Justage mit einem translativ verschiebbaren Rotationsgelenk benötigt wird und Einstellvorrichtungen aus Raumbedarf nicht eingesetzt werden können.

## Patentansprüche

1. Gerät zum Lesen und/oder Beschreiben optischer Aufzeichnungsträger mit einem optischen Aufbau (10) und einer mit diesem gekoppelten Laserdiode, **dadurch gekennzeichnet, daß** die Laserdiode eine Twin-Laserdiode (1) ist, die mittels eines translativ verschiebbaren Rotationsgelenks (10) mit dem optischen Aufbau (9) gekoppelt ist.

2. Gerät gemäß Anspruch 1, **dadurch gekennzeichnet, daß** das translatorisch verschiebbare Rotationsgelenk (10) ein Schieber (11) ist, der von einer Feder (13) vorgespannt, mittels eines Einstellelements (14) entgegen der Vorspannung verschiebbar, und mit einem Aufnehmer (17) für die Laserdiode (1) drehbeweglich verbunden ist.

3. Gerät nach Ansprüche 2, **dadurch gekennzeichnet, daß** das Einstellelement ein Exzenter (14) ist.

4. Gerät nach einem der vorhergehenden Ansprüche, **dadurch gekennzeichnet, daß** die zueinander justierten Elemente Laserdiode (1), Rotationsgelenk (10) und optischer Aufbau (9) miteinander verklebt sind.
